# EUROPÄISCHE PATENTSCHRIFT

(11) **EP 3 480 168 B1**
(45) Veröffentlichungstag und Bekanntmachung des Hinweises auf die Patenterteilung: **07.01.2026**
(21) Anmeldenummer: 18194433.1
(22) Anmeldetag: 14.09.2018
(51) Int. Cl.: C02F 1/00, B01D 21/00, B01D 21/24, C02F 1/32, C02F 1/78, C02F 1/28

(54) **ANORDNUNGEN EINES FILTRATIONSSYSTEMS UND EINES BECKENS SOWIE VERFAHREN ZUM BETREIBEN DER ANORDNUNG**
FILTRATION SYSTEM ASSEMBLY AND A BASIN AS WELL AS METHOD FOR OPERATING THE FILTRATION SYSTEM ASSEMBLY
AGENCEMENT DU SYSTÈME DE FILTRATION ET D'UN BASSIN AINSI QUE PROCÉDÉ DE FONCTIONNEMENT DU AGENCEMENT

(30) Priorität: 03.11.2017 DE 102017010239
(43) Veröffentlichungstag der Anmeldung: 08.05.2019
(73) Patentinhaber: Könemann, Norbert, 34376 Calden-Obermeiser (DE)
(72) Erfinder: Könemann, Norbert, 34376 Calden-Obermeiser (DE)
(74) Vertreter: Franke, Markus

(56) Entgegenhaltungen:
- WO-A1-93/23335
- US-A- 1 379 095
- US-A- 2 878 935
- US-A- 3 473 661
- US-A- 4 743 382
- US-A- 5 227 076
- US-A- 5 804 062

## Beschreibung

Die Erfindung betrifft eine Anordnung umfassend ein Becken und ein Filtrationssystem zur Filtration des Wassers des Beckens, wobei das Becken als Absetzbecken ausgebildet ist. Ferner betrifft die Erfindung ein Verfahren zum Betreiben der Anordnung..

Die Erfindung findet insbesondere Anwendung bei Kläranlagen. An die Reinigungsleistung von Kläranlagen werden immer höhere Anforderungen gestellt. Kläranlagen sind in der Regel dreistufig aufgebaut. Sie weisen üblicherweise eine erste Reinigungsstufe in Form einer mechanischen Reinigung / Vorklärung, eine zweite Reinigungsstufe in Form einer Belebungsstufe und eines Nachklärbeckens sowie eine dritte Reinigungsstufe in Form einer Phosphatfällung auf.

Typischerweise sind Nachklärbecken als Absetzbecken ausgebildet, wobei sich in dem Nachklärbecken durch Sedimentation eine Klarwasserzone ausbildet, wobei das Wasser im Bereich der Klarwasserzone in einen Ablauf strömt oder einem Ablauf zugeführt wird. In der Regel wird das in den Ablauf gelangte Wasser in einen Vorfluter geleitet.

Aufgrund der relativ hohen Belastung des zu klärenden Abwassers, insbesondere durch hohe Schmutzfrachten, weisen bestehende Kläranlagen eine zu geringe Reinigungskapazität auf, sodass das Wasser in der Klarwasserzone eine zu hohe Konzentration an Schadstoffen, beispielsweise in Form von Mikroplastik, Arzneimittelresten, Hormonen, Röntgenkontrastmittel sowie Keimen, insbesondere multiresistente Keimen, aufweist, ferner Schwimm- und Blähschwämme auftreten. Insbesondere leistungsschwache Vorfluter müssen vor dem Einleiten zu hoher Schadstoffmengen geschützt werden.

Um die Schadstoffbelastung des in der Kläranlage gereinigten Abwassers zu reduzieren ist vorgesehen, dass Kläranlagen eine weitere Reinigungsstufe, eine sogenannte 4. Reinigungsstufe, aufweisen.

Auch bei bestehenden Kläranlagen ist eine Nachrüstung mit einer weiteren Reinigungsstufe sinnvoll bzw. notwendig, insbesondere wenn deren Nachklärbecken eine zu geringe Randtiefe aufweisen und/oder bei Mischwasserzufluss hydraulisch überlastet sind. Außerdem kann es zu Überbelastungen der Nachklärung kommen, wenn bei zunehmender Belastung der Kläranlage die Trockensubstanz im Belebungsbecken erhöht werden muss.

Die weitere Reinigungsstufe kann in Form einer Filtration des Abwassers ausgebildet sein oder eine Filtration des Abwassers aufweisen.

Der Bau einer Filtrationsanlage ist technisch aufwendig, da entsprechende Filteranlagen mit Vorlagebehälter, Förderpumpen und Ausgleichsbecken für die Rückspülung gebaut werden müssen. Diese Einrichtungen sind gegebenenfalls mit Bauwerken vor Witterungseinflüssen zu schützen. Dadurch wird der Platzbedarf der Kläranlage wesentlich erhöht. Aufgrund des zusätzlichen Platzbedarfs ist die Nachrüstung von bestehenden dreistufigen Kläranlagen problematisch.

Kläranlagen mit einer in einem Becken angeordneten Filtrationsvorrichtung sind aus dem Stand der Technik bekannt. Die AT 403 374 B zeigt eine kompakte Kleinkläranlage, bei der einem Abflusskanal eines Nachklärbeckens ein Filter vorgeschaltet ist. Weitere Vorrichtungen zur Reinigung von Wasser, welche ein Filter aufweisen, sind aus der DE 93 16 554 U1, aus der DE 197 20 983 A1 sowie aus der DE 2 261 203 A bekannt.

Aus der US 2 878 935 A ist eine Anordnung eines Absetzbeckens und ein Filtrationssystem zur Filtration des Wassers des Absetzbeckens bekannt, welche die Merkmale des Oberbegriffs des Patentanspruchs 1 aufweist.

Weiteren Stand der Technik bilden die US 5 804 062 A, die US 4 743 382 A, die WO 93/23335 A1, die US 1 379 095 A, die US 3 473 661 A und die US 5 227 076 A.

Aufgabe der vorliegenden Erfindung ist es, eine Anordnung, welche die Merkmale des Oberbegriffs des Patentanspruchs 1 aufweist, derart weiterzubilden, dass die Anordnung besonders platzsparend ausgebildet ist und ein Nachrüsten bereits bestehender Kläranlagen, insbesondere kommunaler Kläranlagen, mit dem Filtrationssystem besonders einfach und kostengünstig ermöglicht ist und insbesondere einen Dauerbetrieb gewährleistet ist. Weiterhin ist es Aufgabe der Erfindung, ein Verfahren zum Betreiben der Anordnung anzugeben.

Diese Aufgabe wird durch eine Anordnung, die die Merkmale des Patentanspruchs 1 aufweist, gelöst. Ferner wird die Aufgabe durch Verfahren nach Anspruch 13 gelöst.

Das Filtrationssystem dient zur Filtration des Wassers eines Absetzbeckens, insbesondere eines Absetzbeckens einer Kläranlage.

Unter dem Begriff Absetzbecken wird vorliegend ein nahezu strömungsfreies Becken verstanden, in dem unter Einwirkung der Schwerkraft in dem Wasser vorliegende Stoffe, insbesondere Feststoffe, beispielsweise Schlamm aus einem vorgelagerten Belebungsbecken, sedimentiert werden und damit eine Abtrennung absetzbarer Stoffe von dem Wasser erzielt werden kann. Im oberen Bereich des in dem Absetzbecken vorliegenden Wassers bildet sich aufgrund der Sedimentation eine sogenannte Klarwasserzone aus, welche frei oder im Wesentlichen frei von sedimentierenden Stoffen ist.

Nachklärbecken von Kläranlagen sind typischerweise als Absetzbecken ausgebildet.

Das Filtrationssystem weist zumindest zwei Filtrationsvorrichtungen auf. Die jeweilige Filtrationsvorrichtung weist eine Zulauföffnung für zu filterndes Wasser des Beckens auf. Das durch die Zulauföffnung in die Filtrationsvorrichtung eintretende zu filternde Wasser durchströmt ein Filtrationsmedium der Filtrationsvorrichtung. Das Filtrationssystem weist eine erste Sammelleitung auf, zur Aufnahme des aus der jeweiligen Filtrationsvorrichtung ausströmenden, gefilterten Wassers und zur Zuführung des gefilterten Wassers zu einem gemeinsamen Ablauf. Der Ablauf kann dann beispielsweise in einen Vorfluter münden. Ferner sind die Filtrationsvorrichtungen rückspülbar.

In dem Filtrationsmedium der Filtrationsvorrichtung werden Schwebstoffe und Feinanteile, insbesondere Schwimmschlämme, sowie Schadstoffe, wie z.B. Mikroplastik usw. zurückgehalten, welche noch in dem Wasser des Beckens vorliegen. Somit wird eine besonders gute Reinigung des dem gemeinsamen Ablauf zugeführten Wassers erreicht.

Das Filtrationssystem mit mehreren Filtrationsvorrichtungen hat den Vorteil, dass die notwendige Filtrationskapazität auf mehrere Filtrationsvorrichtungen aufgeteilt werden kann. Dadurch werden die Fertigung, der Transport und der Montageaufwand, insbesondere beim Nachrüsten bereits bestehender Becken, beispielsweise bestehender Absetzbecken von Kläranlagen, mit dem Filtrationssystem erleichtert.

Des Weiteren hat ein Filtrationssystem mit zumindest zwei Filtrationsvorrichtungen den Vorteil, dass die Filtrationsvorrichtungen unabhängig oder zumindest weitgehend unabhängig voneinander arbeiten können.

An dieser Stelle sei angemerkt, dass die zumindest zwei Filtrationsvorrichtungen nicht "hintereinander geschaltet", sondern "parallel geschaltet" sind. Unter "hintereinander geschaltet" wird verstanden, dass das von einer ersten Filtrationsvorrichtung der zumindest zwei Filtrationsvorrichtungen gefilterte Wasser der zweiten Filtrationsvorrichtung der zumindest zwei Filtrationsvorrichtungen zugeführt wird. Somit ist Voraussetzung für einen ordnungsgemäßen Betrieb eines Filtrationssystems mit zwei hintereinander geschalteten Filtrationsvorrichtungen, dass die beiden hintereinander geschalteten Filtrationsvorrichtungen in Betrieb sind.

Die zumindest zwei Filtrationsvorrichtungen des erfindungsgemäßen Filtrationssystems arbeiten hingegen unabhängig oder zumindest weitgehend unabhängig voneinander, sind folglich "parallel geschaltet". Somit können eine oder mehrere der Filtrationsvorrichtungen der zumindest zwei Filtrationsvorrichtungen außer Betrieb genommen werden, wobei in diesem Zustand keine Filtration des Wassers durch die außer Betrieb befindliche Filtrationsvorrichtungen erfolgt, und die übrigen Filtrationsvorrichtungen können weiterhin in Betrieb bleiben, somit das Wasser filtern. Dadurch ist es möglich, bei ausreichender Filterkapazität der übrigen Filtrationsvorrichtungen, eine oder mehrere Filtrationsvorrichtungen der zumindest zwei Filtrationsvorrichtungen außer Betrieb zu nehmen, beispielsweise um diese zu reparieren, zu warten, zu reinigen, insbesondere rückzuspülen oder das Filtrationsmedium auszutauschen, ohne den Betrieb des Filtrationssystems zu stoppen, sodass Wasser des Beckens weiterhin gefiltert und dem Becken daher weiterhin Abwasser zugeführt werden kann.

Auch kann durch die Inbetriebnahme oder Außerbetriebnahme der Filtrationsvorrichtungen die Gesamt-Filtrationsleistung des Filtrationssystems geregelt werden.

Dadurch, dass die Filtrationsvorrichtungen rückspülbar sind, kann das mit gefilterten Stoffen belegte Filtrationsmedium besonders einfach gereinigt werden.

Die Rückspülung der Filtrationsvorrichtung kann beispielsweise mit Brauch- oder gereinigtem Abwasser erfolgen.

Es ist durchaus denkbar, dass beim Rückspülen Luft in das Filtrationsmedium eingeblasen oder eingesogen wird, insbesondere zur Auflockerung des Filtrationsmediums.

Eine Filtrationsvorrichtung der zumindest zwei Filtrationsvorrichtungen ist unabhängig von den übrigen Filtrationsvorrichtungen rückspülbar und/oder mehrere Filtrationsvorrichtungen der zumindest zwei Filtrationsvorrichtungen sind unabhängig von den übrigen Filtrationsvorrichtungen rückspülbar. Somit können beim Rückspülen von einer oder mehrerer Filtrationsvorrichtungen die übrigen Filtrationsvorrichtungen in Betrieb bleiben. Die zur Rückspülung notwendige Spülwassermenge ist dabei geringer als bei einer einzelnen, größeren Filtrationsvorrichtung mit der gleichen Gesamtfilterleistung. Dies wirkt sich vorteilhaft auf den Platzbedarf des Filtrationssystems, die Menge des vorzuhaltenden Spülwassers und die Dimensionierung von Zu- und/oder Ablaufleitungen für das Spülwasser aus.

Vorzugsweise ist die jeweilige Filtrationsvorrichtung unabhängig von den übrigen Filtrationsvorrichtungen rückspülbar. Bei dieser Ausführungsform sind somit die mehreren Filtrationsvorrichtungen unabhängig voneinander rückspülbar, sodass die Filtrationsvorrichtungen jeweils separat rückgespült werden können.

Es ist aber auch durchaus denkbar, dass jeweils mehrere Filtrationsvorrichtungen gemeinsam und unabhängig von den übrigen Filtrationsvorrichtungen rückspülbar sind. Beispielsweise sind bei einem Filtrationssystem mit sechs Filtrationsvorrichtungen jeweils zwei Filtrationsvorrichtungen gemeinsam und unabhängig von den übrigen vier Filtrationsvorrichtungen rückspülbar.

Hinsichtlich eines Rückspülens wird es als vorteilhaft angesehen, wenn die jeweilige Filtrationsvorrichtung eine Einlassöffnung für Spülwasser zwecks Rückspülens des Filtrationsmediums aufweist.

Es ist durchaus denkbar und bevorzugt, dass die Einlassöffnung für das Spülwasser durch eine Ablauföffnung der jeweiligen Filtrationsvorrichtung für das gefilterte Wasser gebildet ist.

Durch die erste Sammelleitung wird das gefilterte Wasser der zumindest zwei Filtrationsvorrichtungen gesammelt, bevor dieses Wasser dem gemeinsamen Ablauf zugeführt wird. Dies hat zum einen den Vorteil, dass auf besonders einfache Art und Weise eine Regelung eines Volumenstroms des gesamten gefilterten Wassers erfolgen kann, indem beispielsweise der Volumenstrom des aus der ersten Sammelleitung dem gemeinsamen Ablauf zugeführten Wassers geregelt wird. Dadurch, dass die zumindest zwei Filtrationsvorrichtungen über die erste Sammelleitung in Verbindung stehen, kann auf eine aufwendige separate Regelung der einzelnen Filtrationsvorrichtungen verzichtet werden.

Die erste Sammelleitung hat des Weiteren den Vorteil, dass bei einer außer Betrieb befindlichen Filtrationsvorrichtung dennoch Wasser der übrigen Filtrationsvorrichtungen der ersten Sammelleitung zugeführt wird, somit eine Trockenlegung von Leitungen des Filtrationssystems weitgehend vermieden wird.

Vorzugsweise ist die erste Sammelleitung in dem Becken, insbesondere unterhalb des Wasserspiegels des Beckens angeordnet.

Vorzugsweise weist das Filtrationssystem zumindest fünf Filtrationsvorrichtungen, besonders bevorzugt zumindest zwanzig Filtrationsvorrichtungen, insbesondere zumindest fünfzig Filtrationsvorrichtungen auf.

In einer bevorzugten Ausführungsform weist das Filtrationsmedium eine Filterschüttung auf oder ist durch eine Filterschüttung gebildet. Bei der Schüttung handelt es sich insbesondere um eine Sand- und/oder Kiesschüttung.

Vorzugsweise lagert die Filterschüttung auf einem gelochten Filterboden der Filtrationsvorrichtung.

Das Filtrationsmedium kann durchaus auch aus einem anderen geeigneten Material bestehen. Beispielsweise ist das Filtrationsmedium als Mikrogewebe, z.B. als räumliches Mikrogewebe, ausgeführt oder als Membrane ausgeführt.

In einer vorteilhaften Weiterbildung durchströmt das zu filternde Wasser das Filtrationsmedium in einer vertikalen oder im Wesentlichen vertikalen Richtung. In diesem Zusammenhang wird es als besonders vorteilhaft angesehen, wenn die Zulauföffnung oberhalb des Filtrationsmediums und/oder eine Ablauföffnung für das gefilterte Wasser unterhalb des Filtrationsmediums ausgebildet ist. Vorzugsweise erstreckt sich eine Öffnungsfläche der Zulauföffnung horizontal oder im Wesentlichen horizontal.

Um das Spülwasser abzuführen, ist vorgesehen, das die Filtrationsvorrichtung eine Auslassöffnung aufweist, zum Abführen des das Filtrationsmedium beim Rückspülen durchströmenden Spülwassers aus der Filtrationsvorrichtung.

Vorzugsweise kann das zugeführte Spülwasser die Filtrationsvorrichtung ausschließlich durch die Auslassöffnung verlassen. Dadurch wird ein Austritt des Spülwassers aus der Zulauföffnung und eine damit einhergehende Beunruhigung des Wassers in dem Becken vermieden bzw. verhindert. Das aus der Auslassöffnung austretende verunreinigte Spülwasser kann dann dem Becken oder einer dem Becken vorgelagerten Reinigungsstufe zugeführt werden, oder zurück in den Reinigungsprozess zugeführt werden.

Die Auslassöffnung ist vorzugsweise auf einer der Einlassöffnung gegenüber liegenden Seite des Filtrationsmediums ausgebildet, insbesondere oberhalb des Filtrationsmediums ausgebildet.

Es ist vorgesehen, dass die jeweilige Filtrationsvorrichtung ein Verschlussmittel zum Verschließen der Zulauföffnung auf.

Es ist vorgesehen, dass das Verschlussmittel beim Rückspülen der Filtrationsvorrichtung unter Einwirkung des Spülwassers die Zulauföffnung verschließt. Bei einer derartigen Gestaltung des Verschlussmittels wird es als besonders vorteilhaft angesehen, dass nach Beendigung des Rückspülens das Verschlussmittel unter Einwirkung des Wasserdrucks des Absetzbeckens die Zulauföffnung öffnet.

In einer vorteilhaften Weiterbildung weist das Filtrationssystem eine Regeleinrichtung auf, zur Regelung eines Volumenstroms des dem gemeinsamen Ablauf zugeführten, gefilterten Wassers, wobei die Regeleinrichtung zwischen der ersten Sammelleitung und dem gemeinsamen Ablauf angeordnet ist. Vorzugsweise wird mittels der Regeleinrichtung der Volumenstrom des gefilterten Wassers derart geregelt, dass ein Wasserspiegel im Becken unabhängig von der Zulaufmenge des dem Becken zugeführten Wassers konstant bleibt.

Vorzugsweise weist die Regeleinrichtung einen Regelschacht auf, wobei das gefilterte Wasser dem Regelschacht zugeführt wird, wobei der Regelschacht einen in den Ablauf mündenden Auslass aufweist, wobei in dem Regelschacht eine Einrichtung zur Regelung der Differenz zwischen einem Wasserstand in dem Regelschacht und einem Wasserstand in dem Becken angeordnet ist. Somit kann die Differenz zwischen dem Wasserstand im Absetzbecken und dem Wasserstand im Regelschacht derart eingestellt werden, dass ein durch die Filtrationsvorrichtungen und ggf. weiterer Elemente des Filtrationssystems erzeugter Fließwiderstand überbrückt wird.

Bei der Einrichtung zur Regelung der Differenz zwischen dem Wasserstand in dem Regelschacht und dem Wasserstand in dem Becken handelt es sich vorzugweise um ein mobiles Wehr.

Vorzugsweise wird der Wasserstand im Regelschacht derart geregelt, dass der Wasserspiegel im Becken unabhängig von der Zulaufmenge des dem Becken zugeführten Wassers konstant bleibt.

Es ist durchaus denkbar, dass das Filtrationssystem, insbesondere die jeweilige Filtrationsvorrichtung eine Fördervorrichtung zum Fördern des gefilterten Wassers aufweist. Vorzugsweise handelt es sich bei der Fördervorrichtung um eine Pumpe. Vorzugsweise wird die Fördervorrichtung derart betrieben, dass der Wasserstand im Becken unabhängig von der Zulaufmenge des dem Becken zugeführten Wassers konstant bleibt.

Vorzugsweise weist die jeweilige Filtrationsvorrichtung eine erste Leitung zum Zuführen des gefilterten Wassers zu der ersten Sammelleitung auf, wobei die erste Leitung ein erstes Regelventil aufweist, zur Regelung eines Volumenstroms des gefilterten Wassers durch die erste Leitung, insbesondere zum Verschließen der ersten Leitung.

Dadurch kann zum einen der Volumenstrom des gefilterten Wassers geregelt werden. Weiterhin kann bei einem Rückspülen der Filtrationsvorrichtung verhindert werden, dass Spülwasser in die Sammelleitung gelangt, indem beim Rückspülen die erste Leitung mittels des ersten Regelventils geschlossen wird.

Es wird als vorteilhaft angesehen, wenn die Filtrationsvorrichtung eine zweite Leitung zum Zuführen des Spülwassers zu der Filtrationsvorrichtung aufweist, vorzugsweise die zweite Leitung in die Einlassöffnung für das Spülwasser mündet, wobei die zweite Leitung ein zweites Regelventil aufweist, zur Regelung des Volumenstroms des Spülwassers durch die zweite Leitung, insbesondere zum Verschließen der zweiten Leitung.

Dadurch kann der Volumenstrom des Spülwassers geregelt werden. Weiterhin kann bei einem Filterbetrieb der Filtrationsvorrichtung verhindert werden, dass gefiltertes Wasser über die zweite Leitung abgeleitet wird.

Das jeweilige Regelventil kann beispielsweise als Schieber, Magnet- oder Quetschventil ausgebildet sein.

Es ist durchaus denkbar, dass ein Teilabschnitt der ersten Leitung auch einen Teilabschnitt der zweiten Leitung bildet, insbesondere wenn die Einlassöffnung durch die Ablauföffnung gebildet ist.

In einer vorteilhaften Weiterbildung weist das Filtrationssystem eine zweite Sammelleitung auf, zur Aufnahme des aus der jeweiligen Filtrationsvorrichtung, insbesondere aus der jeweiligen Auslassöffnung ausströmenden Spülwassers.

Vorzugsweise ist die zweite Sammelleitung außerhalb des Beckens, insbesondere oberhalb des Wasserspiegels des Beckens angeordnet.

Unter dem Aspekt einer Entkeimung und Desinfektion des Wassers weist das Filtrationssystem in einer bevorzugten Ausführungsform eine Bestrahlungseinrichtung auf, zur Bestrahlung des gefilterten Wassers mit Ultraviolettstrahlung, insbesondere mit einer Strahlung in einem Wellenlängenbereich von 200 nm bis 280 nm.

Die Bestrahlungseinrichtung kann durchaus im Bereich der Sammelleitung und/oder im Bereich der ersten Leitung angeordnet sein. Vorzugsweise ist die erste Sammelleitung bzw. die erste Leitung als Rohrleitung ausgebildet, wobei eine Strahlungsquelle der Bestrahlungseinrichtung innerhalb der Rohrleitung angeordnet ist. Vorzugsweise ist die Strahlungsquelle konzentrisch in der Rohrleitung angeordnet.

Als besonders vorteilhaft wird es angesehen, wenn die jeweilige Filtrationsvorrichtung eine Bestrahlungseinrichtung aufweist. Dies hat den Vorteil, dass die jeweils mittels der Bestrahlungseinrichtung zu bestrahlende Wassermenge relativ gering ist, da ein Volumenstrom des gefilterten Wassers der jeweiligen Filtrationsvorrichtung geringer ist, als ein Gesamtvolumenstrom des dem Ablauf zugeführten gefilterten Wassers. Dadurch können auch leistungsschwächere Bestrahlungseinrichtungen verwendet werden. Zudem kann das Filtrationssystem auch bei Ausfall einer oder mehrere Bestrahlungseinrichtungen weiter betrieben werden, da lediglich die der ausgefallenen Bestrahlungseinrichtung zugeordnete Filtrationsvorrichtung außer Betrieb genommen werden muss.

Vorzugsweise weist das Filtrationssystem eine Vorrichtung zum Einbringen, insbesondere zum Einperlen von Ozon in das Wasser auf, wobei das Ozon im Bereich der Filtrationsvorrichtung dem zu filternden Wasser zugeführt wird und/oder das Ozon dem gefilterten Wasser zugeführt wird. Durch das Einbringen von Ozon können beispielsweise Arzneimittelreste unschädlich gemacht werden.

Das Einbringen von Ozon erfolgt vorzugsweise vor dem Filtrationsmedium.

Vorzugweise weist das Filtrationssystem Aktivkohle auf.

Als besonders vorteilhaft wird es angesehen, wenn die Aktivkohle der Vorrichtung zum Einbringen von Ozon in Fließrichtung des gefilterten Wassers nachgelagert ist, da typischerweise die mittels des Ozons oxidierten Stoffe mittels der Aktivkohle abgeschieden werden können.

Es ist durchaus denkbar, dass das Filtrationsmedium Aktivkohle aufweist.

Es ist aber auch durchaus denkbar, dass die Aktivkohle dem Filtrationsmedium nachgelagert ist.

Vorzugsweise weist die jeweilige Filtrationsvorrichtung einen Bereich mit Aktivkohle auf.

Vorzugsweise weist das Filtrationssystem, insbesondere die jeweilige Filtrationsvorrichtung einen Durchflusssensor und/oder Drucksensor zur Messung der Durchflussmenge des gefilterten Abwassers bzw. zur Messung des Drucks des gefilterten Abwassers. Mittels des Sensors kann beispielsweise eine Störung der Filtrationsvorrichtung festgestellt werden. Insbesondere ermöglicht der Sensor eine Bestimmung der Filterleistung der jeweiligen Filtrationsvorrichtung.

Es ist insbesondere denkbar, dass bei Unterschreitung eines Grenzwerts der Durchflussmenge bzw. des Volumenstroms des Wassers bzw. des Drucks bzw. einer Druckdifferenz automatisch die entsprechende Filtrationsvorrichtung rückgespült wird.

Bei der erfindungsgemäßen Anordnung des Filtrationssystems und eines Beckens ist das Becken als Absetzbecken ausgebildet. Die Zulauföffnung der jeweiligen Filtrationsvorrichtung ist im Bereich einer Klarwasserzone des Absetzbeckens angeordnet. Die Anordnung des Zulaufs im Bereich der Klarwasserzone des Absetzbeckens hat den Vorteil, dass nur Wasser aus der Klarwasserzone der jeweiligen Filtrationsvorrichtung zugeführt wird. Das der jeweiligen Filtrationsvorrichtung zugeführte Wasser ist somit bereits frei oder im Wesentlichen frei von Verunreinigungen des dem Absatzbecken zugeführten Abwassers, da ein Großteil der Verunreinigungen bereits sedimentiert ist. Dies wirkt sich vorteilhaft auf die Lebensdauer, die Filterleistung sowie die Wartungs- und Reinigungsintervalle der Filtrationsvorrichtungen aus.

Bei der erfindungsgemäßen Anordnung des Filtrationssystems und eines Beckens sind die Filtrationsvorrichtungen innerhalb des Beckens angeordnet, insbesondere sind die Filtrationsvorrichtungen unterhalb eines Wasserspiegels des Beckens angeordnet. Eine derartige Ausführungsform ist besonders geeignet, ein bereits bestehendes Becken, insbesondere ein Absetzbecken in einfacher Art und Weise und besonders platzsparend mit einer Filtration nachzurüsten.

Vorzugsweise sind die Filtrationsvorrichtungen in einem Randbereich des Beckens angeordnet. Dadurch sind die Filtrationsvorrichtungen gut zugänglich. Zudem weist die Klarwasserzone im Randbereich eines als Absetzbecken ausgebildeten Beckens typischerweise die geringste Konzentration von durch Sedimentation absetzbaren Stoffen auf, was sich vorteilhaft auf die Lebensdauer und/oder das Wartungsintervall des Filtrationsmediums auswirkt.

Es wird als vorteilhaft angesehen, wenn die Filtrationsvorrichtungen gleichmäßig verteilt im Randbereich des Beckens angeordnet sind.

Sind die Filtrationseinrichtungen im Randbereich des Beckens angeordnet, insbesondere radial außen oder an einer Beckenseite eines im Bereich der Wasseroberfläche eckigen Beckens, erzeugen die Filtrationseinrichtungen eine gerichtete Strömung im Becken - radial oder längs -. Damit ist eine im Wesentlichen gleichmäßige Beschickung der Filtrationseinrichtungen und damit gleichmäßige Behandlung des Wassers gewährleistet, auch unter Windeinfluss auf die Wasseroberfläche im Becken. Insbesondere hat jede Filtrationseinrichtung eine im Wesentlichen gleiche hydraulische Belastung, es erfolgt ein im Wesentlichen gleichmäßiger Abzug von Wasser, somit kein Kurzschluss des Wasserstroms.

Insbesondere wird durch eine dezentrale Anordnung und damit die Aufteilung des Wasserabzuges eine gleichmäßige hydraulische Belastung der Filtrationseinrichtungen und damit gleichmäßige Strömung im Becken erzeugt.

Es wird als zweckmäßig angesehen, wenn Wasser lediglich durch die Filtrationsvorrichtungen aus dem Becken abfließen kann. Somit wird gewährleistet, dass nur gefiltertes Wasser in den gemeinsamen Ablauf und ggf. von dort in den Vorfluter gelangt.

Vorzugsweise ist die erste Sammelleitung in dem Becken, insbesondere unterhalb des Wasserspiegels des Beckens angeordnet.

Vorzugsweise ist die zweite Sammelleitung außerhalb des Beckens, insbesondere oberhalb des Wasserspiegels des Beckens angeordnet.

Das erfindungsgemäße Verfahren zum Betreiben des Filtrationssystems mit zumindest zwei Filtrationsvorrichtungen erfolgt derart, dass während des Rückspülens einer oder mehrerer Filtrationsvorrichtungen zumindest eine der übrigen Filtrationsvorrichtungen in Betrieb ist.

Dabei wird unter dem Begriff "in Betrieb" verstanden, dass sich die Filtrationsvorrichtung in einem Zustand befindet, in dem über die Zulauföffnung Wasser in die Filtrationsvorrichtung einströmt und das eingeströmte Wasser über das Filtrationsmedium gefiltert wird.

Es ist durchaus denkbar, dass die Filtrationsvorrichtungen jeweils einzeln rückgespült werden. Es ist aber auch durchaus denkbar, dass mehrere Filtrationsvorrichtungen gemeinsam rückgespült werden, während die übrigen Filtrationsvorrichtungen in Betrieb sind. Es ist auch durchaus denkbar, dass die Filtrationsvorrichtungen gruppenweise, beispielsweise paarweise, rückgespült werden.

Erfindungsgemäß wird beim Rückspülen der Filtrationsvorrichtung die Zulauföffnung mittels des Verschlussmittels verschlossen. Dadurch wird vermieden, dass das Spülwasser aus der Zulauföffnung austritt und in das Absetzbecken einströmt, was zu einer erheblichen Beunruhigung des Wassers im Absetzbecken führen würde, was sich wiederum negativ auf die Sedimentation der im Wasser befindlichen Stoffe auswirken würde.

Erfindungsgemäß wirkt das Spülwasser beim Rückspülen der Filtrationsvorrichtung derart auf das Verschlussmittel ein, dass dieses die Zulauföffnung verschließt. Somit bilden das Verschlussmittel und die Zulauföffnung eine Art Rückschlagarmatur. Vorzugsweise wirkt nach Beendigung des Spülvorgangs der Wasserdruck des Beckens derart auf das Verschlussmittel ein, dass dieses die Zulauföffnung freigibt. Dadurch kann auf eine aktive Steuerung des Verschlussmittels verzichtet werden.

Vorzugsweise erfolgt die Rückspülung der jeweiligen Filtrationsvorrichtung zeitabhängig, insbesondere in festen Zeitintervallen. Insbesondere werden die Filtrationsvorrichtungen zeitlich versetzt gespült.

Es ist durchaus denkbar, dass die Rückspülung der jeweiligen Filtrationsvorrichtung abhängig von einer Durchflussmenge oder eines Volumenstroms des aus der jeweiligen Filtrationsvorrichtung ausströmenden gefilterten Wassers und/oder des Wasserdrucks des gefilterten Wassers ausgelöst wird.

Es wird als besonders vorteilhaft angesehen, wenn die erste Sammelleitung und/oder die zweite Sammelleitung und/oder die erste Leitung und/oder die zweite Leitung als Rohrleitung ausgebildet ist.

In den Figuren ist die Erfindung anhand eines bevorzugten Ausführungsbeispiels dargestellt, ohne hierauf beschränkt zu sein. Es zeigt:
- Fig. 1: Absetzbecken mit einem Ausführungsbeispiel des Filtrationssystems in einer Draufsicht,
- Fig. 2: Eine Filtrationsvorrichtung des Filtrationssystems gemäß Figur 1 in einem Zustand bei dem Wasser mittels der Filtrationsvorrichtung gefiltert wird, in einer Schnittansicht,
- Fig. 3: Die Filtrationsvorrichtung gemäß Figur 2 in einer Schnittansicht in einem Zustand bei dem die Filtrationsvorrichtung rückgespült wird, in einer Schnittansicht.

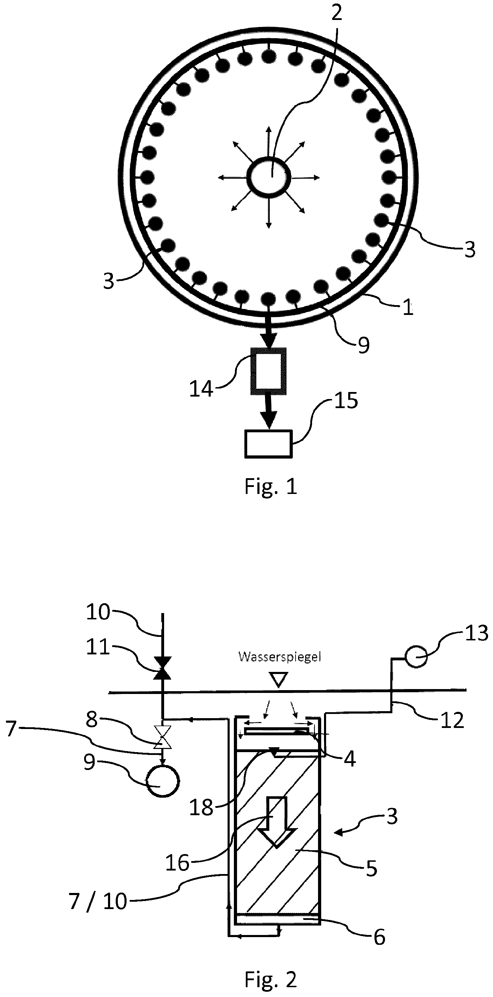

Das in der Fig. 1 dargestellte Filtrationssystem dient der Filtration des Wassers eines Beckens 1. Vorliegend ist das Becken 1 als Absetzbecken ausgebildet. Das Becken 1 weist einen kreisförmigen Querschnitt auf. Das zu reinigende Abwasser strömt aus einem Mittelschacht 2 in das Becken 1 ein und radial nach außen. Das Becken 1 hat einen Durchmesser von ca. 20m. Das Filtrationssystem weist mehrere, nämlich zweiunddreißig Filtrationsvorrichtungen 3 auf. Diese sind gleichmäßig am Rand des Beckens 1 angeordnet und an einer Wand des Beckens 1 befestigt.

Die jeweilige Filtrationsvorrichtung 3 ist unterhalb eines Wasserspiegels des Beckens 1 angeordnet.

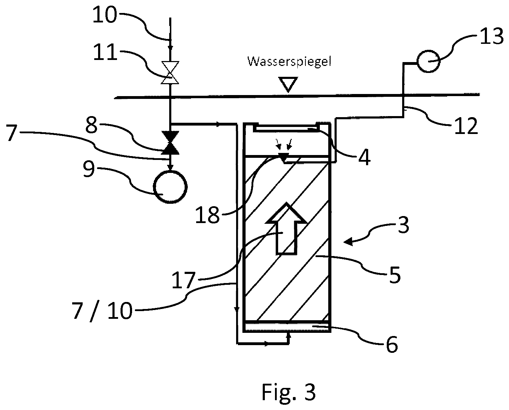

Wie sich den Fig. 2 und 3 entnehmen lässt, weist die jeweilige Filtrationsvorrichtung 3 eine Zulauföffnung für zu filterndes Wasser des Beckens 1 aufweist, wobei die Zulauföffnung im Bereich einer Klarwasserzone des Beckens 1 angeordnet ist.

Die Fig. 2 zeigt die Filtrationsvorrichtung 3 in einem Zustand, bei dem das Wasser mittels der Filtrationsvorrichtung 3 gefiltert wird.

Die Filtrationsvorrichtung 3 weist eine Zulauföffnung für das zu filternde Wasser auf, wobei die Zulauföffnung mittels eines Verschlussmittels 4 verschließbar ist. In dem in der Fig. 2 gezeigten Zustand ist die Zulauföffnung geöffnet. Das zu filternde Wasser tritt durch die geöffnete Zulauföffnung in die jeweilige Filtrationsvorrichtung 3 ein und durchströmt ein Filtrationsmedium 5 der Filtrationsvorrichtung 3. Vorliegend durchströmt das zu filternde Wasser das Filtrationsmedium 5 vertikal von oben nach unten, somit in Richtung des Pfeils 16.

Bei dem in der Fig. 2 gezeigten Zustand strömt das gefilterte Wasser in eine erste Leitung 7 zum Abführen des gefilterten Wassers, wobei die erste Leitung 7 der Filtrationsvorrichtung 3 in eine erste Sammelleitung 9 mündet. Die übrigen Filtrationsvorrichtungen 3 sind identisch ausgebildet, wobei die erste Leitung 7 der übrigen Filtrationsvorrichtungen 3 ebenfalls in die Sammelleitung 9 münden.

Die erste Sammelleitung 9 ist unterhalb des Wasserspiegels des Beckens 1 angeordnet. Sie Sammelleitung 9 ist konzentrisch zu dem Becken 1 ausgebildet.

Mittels der ersten Sammelleitung 9 wird das gefilterte Wasser einem gemeinsamen Ablauf zugeführt, wobei das Filtrationssystem einen Regelschacht 14 aufweist, wobei der Regelschacht 14 zwischen der ersten Sammelleitung 9 und dem Ablauf 15 angeordnet ist. Mittels der ersten Sammelleitung 9 wird das gefilterte Wasser dem Regelschacht 14 zugeführt, wobei der Regelschacht 14 einen in den Ablauf 15 mündenden Auslass aufweist. In dem Regelschacht 14 ist eine Einrichtung, insbesondere ein mobiles Wehr angeordnet, zur Regelung der Differenz zwischen einem Wasserstand in dem Regelschacht 14 und einem Wasserstand in dem Becken 1.

Die Filtrationsvorrichtung 3 weist eine zweite Leitung 10 auf, wobei die zweite Leitung 10 in die erste Leitung 7 mündet. Somit bildet ein zwischen der Einmündung und der Filtrationsvorrichtung 3 ausgebildeter Teilabschnitt der der ersten Leitung 7 auch einen Teilabschnitt der zweiten Leitung 10.

In einem Teilabschnitt der ersten Leitung 7, welcher zwischen der Einmündung der zweiten Leitung 10 in die erste Leitung 7 und der ersten Sammelleitung 9 ausgebildet ist, weist die erste Leitung 7 ein erstes Regelventil 8 auf, zur Regelung der Durchflussmenge, insbesondere zum Verschließen der ersten Leitung 7.

Die zweite Leitung 10 weist ein zweites Regelventil 11 auf, zur Regelung der Durchflussmenge, insbesondere zum Verschließen der ersten zweiten Leitung 10.

Über die zweite Leitung 10 kann Spülwasser in die Filtrationsvorrichtung 3 eingeleitet werden zwecks Rückspülens des Filtrationsmediums 5.

In dem in der Fig. 2 gezeigten Zustand ist das zweite Regelventil 11 geschlossen und das erste Regelventil 8 geöffnet. Somit strömt das zu filternde Wasser durch die geöffnete Zulauföffnung in die Filtrationsvorrichtung 3 ein und das gefilterte Wasser strömt über die erste Leitung 7 in die erste Sammelleitung 9.

Die Fig. 3 zeigt die Filtrationsvorrichtung 3 in einem Zustand, bei dem die Filtrationsvorrichtung 3 rückgespült wird.

In dem in der Fig. 3 gezeigten Zustand ist das zweite Regelventil 11 geöffnet und das erste Regelventil 8 geschlossen. Durch die zweite Leitung 10 strömt das Spülwasser, bei dem es sich beispielsweise um Brauchwasser oder gereinigtes Abwasser handeln kann, in die erste Leitung 7 und über diese in die Filtrationsvorrichtung 3 ein. Das eingeleitete Spülwasser durchströmt das Filtrationsmedium 5 entgegengesetzt zu der Strömungsrichtung des Wassers beim Filtern, vorliegend vertikal von unten nach oben, somit in Richtung des Pfeils 17. Dadurch werden angelagerte Schmutzstoffe und Verunreinigungen aus dem Filtrationsmedium 5 gelöst und von dem Spülwasser mitgerissen.

Unter der Einwirkung des an das Verschlussmittel 4 anströmende Spülwasser und/oder den Druck des Spülwassers verschließt das Verschlussmittel 4 die Zulauföffnung. Das Verschlussmittel 4 und die Zulauföffnung bilden somit eine Art Rückschlagarmatur. Dadurch wird vermieden, dass das Spülwasser und mit dem Spülwasser mitgerissene Stoffe aus der Zulauföffnung austreten und in das Becken 1 einströmen, was u.a. zu einer erheblichen Beunruhigung des Wassers im Becken 1 führen würde, was sich wiederum negativ auf die Sedimentation der Stoffe auswirken würde.

Die Filtrationsvorrichtung 3 weist eine Auslassöffnung 18 auf, zum Abführen des das Filtrationsmedium 5 beim Rückspülen durchströmenden Spülwassers. Die Auslassöffnung 18 der jeweiligen Filtrationsvorrichtung 3 ist mittels einer dritten Leitung 12 mit einer zweiten Sammelleitung 13 verbunden, welche der Aufnahme und dem Abführen des Spülwassers dient. Diese zweite Sammelleitung 13 ist an der Wand des Beckens 1 befestigt und ist oberhalb des Wasserspiegels des Beckens 1 angeordnet, um ein Einströmen von Wasser des Beckens 1 in die zweite Sammelleitung 13 zu vermeiden.

Das Spülwasser kann über die zweite Sammelleitung 13 in den Zulauf einer vorgelagerten Reinigungsstufe und/oder des Beckens 1 geleitet werden.

Nach erfolgreicher Rückspülung der Filtrationsvorrichtung wird das erste Regelventil 8 geöffnet und das zweite Regelventil 11 geschlossen. Durch den auf das Verschlussmittel 4 einwirkenden Wasserdruck des im Becken 1 befindlichen Wassers wird das Verschlussmittel 4 wieder geöffnet und das zu filternde Wasser kann durch die Zulauföffnung in die Filtrationsvorrichtung 3 einströmen.

Vorzugsweise werden die Filtrationsvorrichtungen 3 einzeln und zeitlich versetzt rückgespült.

### Bezugszeichenliste

- 1: Becken
- 2: Mittelschacht des Beckens
- 3: Filtrationsvorrichtung
- 4: Verschlussmittel
- 5: Filtrationsmediuml
- 6: Filterboden
- 7: erste Leitung
- 8: erstes Regelventil
- 9: erste Sammelleitung
- 10: zweite Leitung
- 11: zweites Regelventil
- 12: dritte Leitung
- 13: zweite Sammelleitung
- 14: Regelschacht
- 15: Ablauf
- 16: Pfeil
- 17: Pfeil
- 18: Auslassöffnung

## Patentansprüche

1. Anordnung umfassend ein Becken (1) und ein Filtrationssystem zur Filtration des Wassers des Beckens (1), wobei das Becken (1) als Absetzbecken ausgebildet ist, wobei das Filtrationssystem zumindest zwei parallel geschaltete Filtrationsvorrichtungen (3) aufweist, wobei die jeweilige Filtrationsvorrichtung (3) eine Zulauföffnung für zu filterndes Wasser des Beckens (1) aufweist, wobei die jeweilige Zulauföffnung im Bereich einer Klarwasserzone des Absetzbeckens (1) angeordnet ist, wobei das durch die Zulauföffnung in die jeweilige Filtrationsvorrichtung (3) eintretende zu filternde Wasser ein Filtrationsmedium (5) der Filtrationsvorrichtung (3) durchströmt, wobei die Filtrationsvorrichtungen (3) rückspülbar sind, wobei eine Filtrationsvorrichtung (3) der zumindest zwei Filtrationsvorrichtungen (3) unabhängig von den übrigen Filtrationsvorrichtungen (3) rückspülbar ist und/oder mehrere Filtrationsvorrichtungen (3) der zumindest zwei Filtrationsvorrichtungen (3) gemeinsam und unabhängig von den übrigen Filtrationsvorrichtungen (3) rückspülbar sind, wobei die Filtrationsvorrichtungen (3) innerhalb des Beckens (1) angeordnet sind, wobei das Filtrationssystem eine erste Sammelleitung (9) aufweist, zur Aufnahme des aus der jeweiligen Filtrationsvorrichtung (3) ausströmenden, gefilterten Wassers und zur Zuführung des gefilterten Wassers zu einem gemeinsamen Ablauf (15), wobei die jeweilige Filtrationsvorrichtung (3) eine Auslassöffnung (18) aufweist, zum Abführen des das Filtrationsmedium (5) beim Rückspülen durchströmenden Spülwassers, wobei die jeweilige Filtrationsvorrichtung (3) ein Verschlussmittel (4) zum Verschließen der Zulauföffnung aufweist, **dadurch gekennzeichnet, dass** das Verschlussmittel (4) beim Rückspülen der Filtrationsvorrichtung (3) unter Einwirkung des Spülwassers die Zulauföffnung verschließt.

2. Anordnung nach Anspruch 1, wobei die jeweilige Filtrationsvorrichtung (3) unabhängig von den übrigen Filtrationsvorrichtungen (3) rückspülbar ist.

3. Anordnung nach einem der Ansprüche 1 bis 2, wobei nach Beendigung des Rückspülens das Verschlussmittel (4) unter Einwirkung des Wasserdrucks des Absetzbeckens (1) die Zulauföffnung öffnet.

4. Anordnung nach einem der Ansprüche 1 bis 3, wobei das Filtrationssystem eine Regeleinrichtung aufweist, zur Regelung eines Volumenstroms des dem gemeinsamen Ablauf (15) zugeführten, gefilterten Wassers, wobei die Regeleinrichtung zwischen der ersten Sammelleitung (9) und dem gemeinsamen Ablauf (15) angeordnet ist, insbesondere die Regeleinrichtung einen Regelschacht (14) zur Aufnahme des gefilterten Wassers aufweist, wobei der Regelschacht (14) einen in den gemeinsamen Ablauf (15) mündenden Auslass aufweist, wobei in dem Regelschacht (14) eine Einrichtung zur Regelung der Differenz zwischen einem Wasserstand in dem Regelschacht (14) und einem Wasserstand in dem Becken (1) angeordnet ist.

5. Anordnung nach einem der Ansprüche 1 bis 4, wobei die jeweilige Filtrationsvorrichtung (3) eine erste Leitung (7) zum Zuführen des gefilterten Wassers zu der ersten Sammelleitung (9) aufweist, wobei die erste Leitung (7) ein erstes Regelventil (8) aufweist, zur Regelung eines Volumenstroms des gefilterten Wassers durch die erste Leitung (7), insbesondere zum Verschließen der ersten Leitung (7).

6. Anordnung nach einem der Ansprüche 1 bis 5, wobei die Filtrationsvorrichtung (3) eine zweite Leitung (10) zum Zuführen des Spülwassers zu der Filtrationsvorrichtung (3) aufweist, wobei die zweite Leitung (10) ein zweites Regelventil (11) aufweist, zur Regelung des Volumenstroms des Spülwassers durch die zweite Leitung (10), insbesondere zum Verschließen der zweiten Leitung (10).

7. Anordnung nach einem der Ansprüche 1 bis 6, wobei das Filtrationssystem eine zweite Sammelleitung (13) aufweist, zur Aufnahme des aus der jeweiligen Filtrationsvorrichtung (3), insbesondere aus der jeweiligen Auslassöffnung (18) ausströmenden Spülwassers.

8. Anordnung nach einem der Ansprüche 1 bis 7, wobei das Filtrationssystem, vorzugsweise die jeweilige Filtrationsvorrichtung (3) eine Bestrahlungseinrichtung aufweist, zur Bestrahlung des gefilterten Wassers mit Ultraviolettstrahlung, insbesondere mit einer Strahlung in einem Wellenlängenbereich von 200 nm bis 280 nm.

9. Anordnung nach einem der Ansprüche 1 bis 8, wobei das Filtrationssystem eine Vorrichtung zum Einbringen, insbesondere zum Einperlen von Ozon in das Wasser aufweist, wobei das Ozon im Bereich der jeweiligen Filtrationsvorrichtung (3) dem zu filternden Wasser zugeführt wird und/oder das Ozon dem gefilterten Wasser zugeführt wird.

10. Anordnung nach einem der Ansprüche 1 bis 9, wobei das Filtrationssystem, vorzugsweise das Filtrationsmedium (5) der jeweiligen Filtrationsvorrichtung (3) Aktivkohle aufweist, insbesondere die Aktivkohle der Vorrichtung zum Einbringen von Ozon in Fließrichtung des gefilterten Wassers nachgelagert ist.

11. Anordnung nach einem der Ansprüche 1 bis 10, wobei die erste Sammelleitung (9) innerhalb des Beckens (1) angeordnet ist, insbesondere die erste Sammelleitung (9) unterhalb eines Wasserspiegels des Beckens (1) angeordnet ist.

12. Anordnung nach einem der Ansprüche 1 bis 11, wobei die erste Sammelleitung (9) und/oder die zweite Sammelleitung (13) und/oder die erste Leitung (7) und/oder die zweite Leitung (10) als Rohrleitung ausgebildet ist.

13. Verfahren zum Betreiben der Anordnung nach einem der Ansprüche 1 bis 12, wobei während des Rückspülens einer oder mehrerer Filtrationsvorrichtungen (3) zumindest eine der übrigen Filtrationsvorrichtungen (3) in Betrieb ist, vorzugweise die Filtrationsvorrichtungen (3) einzeln und zeitlich versetzt rückgespült werden.

## Claims

1. Arrangement comprising a tank (1) and a filtration system for filtering the water in the tank (1), wherein: the tank (1) is in the form of a settling tank; the filtration system has at least two filtration units (3) connected in parallel; each filtration unit (3) has an inflow opening for water in the basin (1) that is to be filtered; each inflow opening is located in the region of a clear water zone of the settling tank (1); the water that is to be filtered entering each filtration unit (3) through the inflow opening flows through a filtration medium (5) in the filtration unit (3); the filtration units (3) are back-flushable; one filtration unit (3) of the at least two filtration units (3) can be back-flushed independently of the rest of the filtration units (3) and/or multiple filtration units (3) of the at least two filtration units (3) can be back-flushed jointly and independently of the rest of the filtration units (3); the filtration units (3) are located inside the tank (1); the filtration system has a first header line (9) for receiving the filtered water flowing out of each filtration unit (3) and for feeding the filtered water to a common outflow (15); each filtration unit (3) has an outlet opening (18) for discharging the flushing water flowing through the filtration medium (5) during the back-flushing operation; and each filtration unit (3) has a closure means (4) for closing the inflow opening, **characterized in that** the closure means (4) closes the inflow opening under the action of the flushing water when the filtration unit (3) is being back-flushed.

2. Arrangement according to Claim 1, wherein each filtration unit (3) can be back-flushed independently of the rest of the filtration units (3).

3. Arrangement according to one of Claims 1 to 2, wherein, after the back-flushing has ended, the closure means (4) opens the inflow opening under the action of the water pressure in the settling tank (1).

4. Arrangement according to one of Claims 1 to 3, wherein the filtration system has a control device for controlling a volume flow of the filtered water fed to the common outflow (15), the control device being located between the first header line (9) and the common outflow (15), in particular the control device having a control hopper (14) for receiving the filtered water, the control hopper (14) having an outlet emerging into the common outflow (15), a device for controlling the difference between a water level in the control hopper (14) and a water level in the tank (1) being located in the control hopper (14).

5. Arrangement according to one of Claims 1 to 4, wherein each filtration unit (3) has a first line (7) for feeding the filtered water to the first header line (9), the first line (7) having a first control valve (8) for controlling a volume flow of the filtered water through the first line (7), in particular for closing the first line (7).

6. Arrangement according to one of Claims 1 to 5, wherein the filtration unit (3) has a second line (10) for feeding the flushing water to the filtration unit (3), the first line (10) having a second control valve (11) for controlling the volume flow of the flushing water through the second line (10), in particular for closing the second line (10).

7. Arrangement according to one of Claims 1 to 6, wherein the filtration system has a second header line (13) for receiving the flushing water flowing out of each filtration unit (3), in particular out of each outlet opening (18).

8. Arrangement according to one of Claims 1 to 7, wherein the filtration system, preferably each filtration unit (3), has an irradiation device for irradiating the filtered water with ultraviolet radiation, in particular with a radiation in a wavelength range of 200 nm to 280 nm.

9. Arrangement according to one of Claims 1 to 8, wherein the filtration system has a unit for introducing, in particular for bubbling, ozone into the water, the ozone being fed to the water to be filtered in the region of each filtration unit (3) and/or the ozone being fed to the filtered water.

10. Arrangement according to one of Claims 1 to 9, wherein the filtration system, preferably the filtration medium (5) in each filtration device (3), comprises activated carbon, in particular the activated carbon is downstream of the ozone introducing unit in the direction of flow of the filtered water.

11. Arrangement according to one of Claims 1 to 10, wherein the first header line (9) is located inside the tank (1), in particular the first header line (9) is located below a water level in the tank (1).

12. Arrangement according to one of Claims 1 to 11, wherein the first header line (9) and/or the second header line (13) and/or the first line (7) and/or the second line (10) is in the form of a pipeline.

13. Method for operating the arrangement according to one of Claims 1 to 12, wherein, during the back-flushing of one or more filtration units (3), at least one of the rest of the filtration units (3) is in operation, preferably the filtration units (3) are back-flushed individually and at different times.

## Revendications

1. Agencement comprenant un bassin (1) et un système de filtration pour filtrer l'eau du bassin (1), le bassin (1) étant conçu sous la forme d'un bassin de décantation, le système de filtration comprenant au moins deux dispositifs de filtration (3) montés en parallèle, le dispositif de filtration (3) respectif présentant une ouverture d'alimentation pour l'eau à filtrer du bassin (1), l'ouverture d'alimentation respective étant aménagée dans la zone d'eau claire du bassin de décantation (1), l'eau à filtrer entrant dans le dispositif de filtration respectif (3) par l'ouverture d'alimentation, traversant un milieu filtrant (5) du dispositif de filtration (3), les dispositifs de filtration (3) étant aptes à être rincés à contre-courant, un dispositif de filtration (3) parmi lesdits au moins deux dispositifs de filtration (3) étant apte à être rincé à contre-courant indépendamment des autres dispositifs de filtration (3) et/ou plusieurs dispositifs de filtration (3) parmi lesdits au moins deux dispositifs de filtration (3) étant aptes à être rincés à contre-courant, ensemble et indépendamment des autres dispositifs de filtration (3), les dispositifs de filtration (3) étant agencés à l'intérieur du bassin (1), le système de filtration comprenant une première conduite collectrice (9) pour recevoir l'eau filtrée s'écoulant du dispositif de filtration (3) respectif et pour acheminer l'eau filtrée vers un écoulement commun (15), le dispositif de filtration (3) respectif présentant une ouverture de sortie (18) pour évacuer l'eau de rinçage s'écoulant à travers le milieu filtrant (5) lors du rinçage à contre-courant, le dispositif de filtration (3) respectif présentant un moyen de fermeture (4) pour fermer l'ouverture d'alimentation, **caractérisé en ce que** le moyen de fermeture (4) ferme l'ouverture d'alimentation sous l'effet de l'eau de rinçage lors du rinçage à contre-courant du dispositif de filtration (3).

2. Agencement selon la revendication 1, dans lequel le dispositif de filtration (3) respectif est apte à être rincé à contre-courant indépendamment des autres dispositifs de filtration (3).

3. Agencement selon l'une des revendications 1 à 2, dans lequel, après la fin du rinçage à contre-courant, le moyen de fermeture (4) ouvre l'ouverture d'alimentation sous l'effet de la pression d'eau du bassin de décantation (1).

4. Agencement selon l'une des revendications 1 à 3, dans lequel le système de filtration comprend un dispositif de régulation pour réguler un débit volumique de l'eau filtrée acheminée à l'écoulement commun (15), le dispositif de régulation étant agencé entre la première conduite collectrice (9) et l'écoulement commun (15), le dispositif de régulation comprenant en particulier un puits de régulation (14) destiné à recevoir l'eau filtrée, le puits de régulation (14) présentant une sortie débouchant dans l'écoulement commun (15), un dispositif, destiné à réguler la différence entre un niveau d'eau dans le puits de régulation (14) et un niveau d'eau dans le bassin (1), étant agencé dans le puits de régulation (14).

5. Agencement selon l'une des revendications 1 à 4, dans lequel le dispositif de filtration (3) respectif comprend une première conduite (7) pour acheminer l'eau filtrée vers la première conduite collectrice (9), la première conduite (7) comprenant une première vanne de régulation (8) pour réguler un débit volumique de l'eau filtrée à travers la première conduite (7), en particulier pour fermer la première conduite (7).

6. Agencement selon l'une des revendications 1 à 5 dans lequel le dispositif de filtration (3) comprend une deuxième conduite (10) pour acheminer l'eau de rinçage vers le dispositif de filtration (3), la deuxième conduite (10) comprenant une deuxième vanne de régulation (11) pour réguler le débit volumique de l'eau de rinçage à travers la deuxième conduite (10), en particulier pour fermer la deuxième conduite (10).

7. Agencement selon l'une des revendications 1 à 6, dans lequel le système de filtration comprend une deuxième conduite collectrice (13) pour recueillir l'eau de rinçage s'écoulant du dispositif de filtration respectif (3), en particulier de l'ouverture de sortie respective (18).

8. Agencement selon l'une des revendications 1 à 7, dans lequel le système de filtration, de préférence le dispositif de filtration (3) respectif, comprend un dispositif d'irradiation pour irradier l'eau filtrée avec un rayonnement ultraviolet, en particulier avec un rayonnement dans une gamme de longueurs d'onde allant de 200 nm à 280 nm.

9. Agencement selon l'une des revendications 1 à 8, dans lequel le système de filtration comprend un dispositif pour introduire, en particulier pour injecter de l'ozone dans l'eau, l'ozone étant ajouté à l'eau à filtrer dans la zone du dispositif de filtration (3) respectif et/ou l'ozone étant ajouté à l'eau filtrée.

10. Agencement selon l'une des revendications 1 à 9, dans lequel le système de filtration, de préférence le milieu filtrant (5) du dispositif de filtration (3) respectif, présente du charbon actif, en particulier le charbon actif du dispositif pour introduire de l'ozone étant agencé en aval dans le sens d'écoulement de l'eau filtrée.

11. Agencement selon l'une des revendications 1 à 10, dans lequel la première conduite collectrice (9) est agencée à l'intérieur du bassin (1), en particulier la première conduite collectrice (9) est agencée en dessous d'un niveau d'eau du bassin (1).

12. Agencement selon l'une des revendications 1 à 11, dans lequel la première conduite collectrice (9) et/ou la deuxième conduite collectrice (13) et/ou la première conduite (7) et/ou la deuxième conduite (10) sont conçues sous la forme d'une canalisation.

13. Procédé pour faire fonctionner l'agencement selon l'une des revendications 1 à 12, dans lequel, pendant le rinçage à contre-courant d'un ou de plusieurs dispositifs de filtration (3), au moins un des autres dispositifs de filtration (3) est en service, les dispositifs de filtration (3) étant de préférence rincés à contre-courant individuellement et de manière décalée dans le temps.
